# EUROPEAN PATENT SPECIFICATION

(11) **EP 3 484 303 B1**
(45) Date of publication and mention of the grant of the patent: **03.09.2025**
(21) Application number: 17745570.6
(22) Date of filing: 13.07.2017
(51) Int. Cl.: A21D 13/38, A21D 13/31, A23C 13/16, A23C 19/09, A23L 29/212, A23L 29/219, A23C 9/137, A23C 9/154

(54) **DELAYED-GELLING, INHIBITED TAPIOCA STARCHES AND METHODS OF USING THEM**
INHIBIERTE TAPIOKA-STÄRKEN MIT VERZÖGERTER GELLIERUNG UND VERFAHREN ZUR VERWENDUNG DAVON
AMIDONS DE TAPIOCA INHIBÉS À GÉLIFICATION RETARDÉE ET LEURS PROCÉDÉS D'UTILISATION

(30) Priority: 14.07.2016 US 201662362534 P
(43) Date of publication of application: 22.05.2019
(73) Proprietor: Tate & Lyle Solutions USA LLC, Hoffman Estates, IL 60192 (US)
(72) Inventor: PATTON, Penelope, Ashby, Hoffman Estates IL 60192 (US)
(74) Representative: Marks & Clerk LLP
(86) International application number: PCT/US2017/041966
(87) International publication number: WO 2018/013831

(56) References cited:
- WO-A1-2013/173161
- US-A- 3 977 897
- US-A- 4 013 799
- US-A- 4 465 702
- US-B1- 6 221 420

## Description

### BACKGROUND OF THE DISCLOSURE

### Field

The present disclosure relates to delayed-gelling, inhibited tapioca starch useful, for example, as texturants in foodstuffs, and methods of using them.

### Technical Background

Tapioca starch can provide a number of desirable properties to various foods. It is commonly used as a thickener in puddings, yogurts, fruit fillings, and other foods in which a soft-textured gel is desired. However, tapioca starches, because they contain ~19% amylose, gel fairly quickly after cooking and cooling. This means that tapioca-thickened products often need to be processed hot and not allowed to cool until they are in containers. This can add significant cost and undesirably reduce process flexibility.

There remains a need in the art for starches, especially high-amylose starches, that can remain in an ungelled state for significantly longer than conventional tapioca starches.

US3977897A relates to a process for the preparation of an inhibited starch. US4013799A relates to starch-containing pre-cooked wet food products. US4465702A relates to a cold-water-swelling granular starch. US6221420B1 relates to foods containing thermally-inhibited starches. WO2013173161A1 relates to the production of inhibited non-pregelatinized granular starches which are useful as ingredients in food compositions.

### SUMMARY OF THE DISCLOSURE

One aspect of the disclosure is a delayed-gelling, inhibited tapioca starch having
an amylose content in the range of 15-25%;
a sedimentation volume; and
a % solubles value;
wherein a point corresponding to (sedimentation volume, % solubles value) in a plot of % solubles value vs. sedimentation volume falls within the polygon defined by the set of points (19.1 mL/g, 14.1%), (18.1 mL/g, 17.3%), (33.2 mL/g, 26.9%) and (35.7 mL/g, 21.1%), when the sedimentation volume is measured as disclosed in the description and the % solubles value is measured as disclosed in the description;
wherein the starch is not pregelatinized, is not hydroxypropylated, is not acetylated, is not carboxymethylated, is not hydroxyethylated, is not phosphated, is not succinated, is not cationic or zwitterionic, is not crosslinked with phosphate, is not crosslinked with adipate, is not crosslinked with epichlorohydrin, is not crosslinked with acrolein, is not bleached or oxidized with peroxide or hypochlorite, is not dextrinized, does not contain substantial amounts of the repolymerized branched chains typical of dextrins, and substantially lacks 1,2- and 1,3- branching; and
wherein the starch has a gel time of at least 4 hours and no more than 24 hours after being cooked in pH 6.5 phosphate buffer containing 1% NaCl at 5% starch solids for 20 minutes at 95 °C, then being allowed to sit undisturbed at 25 °C.

Another aspect of the disclosure is a process comprising
providing a delayed-gelling, inhibited starch as described herein,
slurrying the delayed-gelling, inhibited starch in aqueous C2-C3 alkanol to form a slurry, and
subjecting the slurry to conditions of a temperature in the range of 149-182 °C (300-360 °F) and a pressure in the range of 2.76-5.14 mPa (400-600 psig),
to provide a cold-water swelling, delayed-gelling starch.

Another aspect of the disclosure is a method for making a food product, comprising cooking a starch as described herein in the presence of water, providing the cooked starch in combination with one or more other food ingredients, and allowing the starch to form a gel.

Another aspect of the disclosure is a dry mix including a starch as described herein, in admixture with one or more additional dry food ingredients. The invention is defined by the appended set of claims.

### BRIEF DESCRIPTION OF THE DRAWINGS

FIG. 1 is a photomicrograph of a cooked starch paste of a starch of one embodiment of the present disclosure;
FIG. 2 is a graph of a set of RVA cooking curves of starches of various embodiments of the present disclosure;
FIG. 3 is a plot of sedimentation volumes and % solubles for starches of various embodiments of the present disclosure and for various conventionally-cross-linked starches;
FIG. 4 is a bar graph of firmness and opacity ratings on the day of the cook for various starches of the disclosure and various comparative starches;
FIG. 5 is a bar graph of paste thickness and stringiness ratings on the day of the cook for various starches of the disclosure and various comparative starches;
FIG. 6 is a bar graph of firmness ratings of various starches of the disclosure and various comparative starches on the day after cooking;
FIG. 7 is a set of microscope images of test yogurts made with various starches of the disclosure and a comparative starch;
FIG. 8 is a set of viscoelastic measurements of test puddings made with various starches of the disclosure and a comparative starch;
FIG. 9 is a set of microscope images of test puddings made with various starches of the disclosure and a comparative starch;
FIG. 10 is set of microscope images of test dairy desserts made with various starches of the disclosure and a comparative starch; and
FIG. 11 is set of microscope images of test fruit fillings made with various starches of the disclosure and a comparative starch.

### DETAILED DESCRIPTION

One aspect of the disclosure is a delayed-gelling, inhibited tapioca starch having
an amylose content in the range of 15-25%;
a sedimentation volume; and
a % solubles value;
wherein a point corresponding to (sedimentation volume, % solubles value) in a plot of % solubles value vs. sedimentation volume falls within the polygon defined by the set of points (19.1 mL/g, 14.1%), (18.1 mL/g, 17.3%), (33.2 mL/g, 26.9%) and (35.7 mL/g, 21.1%), when the sedimentation volume is measured as disclosed in the description and the % solubles value is measured as disclosed in the description;
wherein the starch is not pregelatinized, is not hydroxypropylated, is not acetylated, is not carboxymethylated, is not hydroxyethylated, is not phosphated, is not succinated, is not cationic or zwitterionic, is not crosslinked with phosphate, is not crosslinked with adipate, is not crosslinked with epichlorohydrin, is not crosslinked with acrolein, is not bleached or oxidized with peroxide or hypochlorite, is not dextrinized, does not contain substantial amounts of the repolymerized branched chains typical of dextrins, and substantially lacks 1,2- and 1,3- branching; and
wherein the starch has a gel time of at least 4 hours and no more than 24 hours after being cooked in pH 6.5 phosphate buffer containing 1% NaCl at 5% starch solids for 20 minutes at 95 °C, then being allowed to sit undisturbed at 25 °C. The present inventors have determined that starches having such characteristics (as well as, in some embodiments, other characteristics described herein) can be especially useful in that they are inhibited and have delayed gelling characteristics, such that they remain substantially ungelled for a relatively long time period after cooking and cooling. This means that products including the cooked starches of the disclosure can have a much longer processing window (e.g., for pumping, dispensing, packaging) at room temperature than conventional tapioca starches. The starches of the disclosure can also have a desirable shear stability, e.g., similar to the shear stability of conventional crosslinked tapioca starches.

In certain embodiments, the delayed-gelling, inhibited starches as otherwise described herein have an amylose content in the range of 15-23%, or 15-20%, or 17-25%, or 17-23%, or 17-20%, 20-25%, or 20-23%. For example, in certain particular embodiments, the delayed-gelling, inhibited starches as otherwise described herein have an amylose content in the range of 15-25%, or 15-17%.

In some embodiments, the delayed-gelling, inhibited starch as otherwise disclosed herein has a sedimentation volume in the range of 22-27 mL/g. In still other embodiments, the delayed-gelling, inhibited starch as otherwise disclosed herein has a sedimentation volume in the range of 27-32 mL/g. In various additional embodiments, the delayed-gelling, inhibited starch as otherwise disclosed herein has a sedimentation volume in the range of 20-35 mL/g, or 20-30 mL/g, or 20-25 mL/g, or 25-35 mL/g, or 25-30 mL/g, or 30-35 mL/g. The person of ordinary skill in the art will appreciate that the sedimentation volume is a measure of the degree of inhibition of the starch, and will select a desired range of sedimentation volumes for a particular end use for the delayed-gelling, inhibited starches described herein.

As used herein, sedimentation volume is the volume that 1 g cooked starch occupies in 100 g (i.e. total, including the starch) of salted buffer solution (1% sodium chloride in pH 6.5 phosphate buffer). This value is also known in the art as "swelling volume." Sedimentation volumes as described herein are determined by first cooking the starch at 5% solids in the salted buffer by suspending a container containing the slurry in a 95 °C water bath and stirring with a glass rod or metal spatula for 6 minutes, then covering the container and allowing the paste to remain at 95 °C for an additional 20 minutes. The container is removed from the bath and allowed to cool on the laboratory bench. The resulting paste is brought back to the initial weight by addition of water (i.e., to replace any evaporated water) and mixed well. 20.0 g of the paste (which contains 1.0 g starch) is weighted into a 100 mL graduated cylinder containing 6.5 pH buffer containing 1% NaCl, and the total weight of the mixture in the cylinder is brought to 100 g using the buffer. The cylinder is allowed to sit undisturbed for 24 hours. The volume occupied by the starch sediment (i.e., as read in the cylinder) is the sedimentation volume for 1 g of starch, i.e., in units of mL/g.

In some embodiments, the delayed-gelling, inhibited starch as otherwise disclosed herein has a % solubles value in the range of 17-21%. In other embodiments, the delayed-gelling, inhibited starch as otherwise disclosed herein has a % solubles value in the range of 19-24%. In various additional embodiments, the delayed-gelling, inhibited starch as otherwise described herein has a % solubles value in the range of 15-25%, or 15-23%, or 15-20%, or 15-18%, or 18-25%, or 18-23%, 20-25%, or 20-23%.

In the sedimentation volume test described above, the supernatant above the granular sediment contains soluble starch, i.e., the portion of the starch that is not retained by the inhibited granules of the sediment. The amount of soluble starch can be quantified by withdrawing a portion of the supernatant, and quantitatively hydrolyzing the starch to dextrose using acid or enzyme, then measuring the concentration of dextrose, e.g., using an instrumental analyzer such as a glucose analyzer available from YSI Incorporated. The concentration of dextrose in the supernatant can be converted algebraically to the % soluble value of the starch.

The present inventors have determined that particular combinations of sedimentation volumes and % soluble values provide especially desirable performance. The delayed-gelling, inhibited starches as otherwise described herein, the point corresponding to (sedimentation volume, % solubles) in a plot of % solubles vs. sedimentation volume falls within the polygon defined by the points (19.1 mL/g, 14.1%), (18.1 mL/g, 17.3%), (33.2 mL/g, 26.9%) and (35.7 mL/g, 21.1 %).

In certain particular embodiments of the delayed-gelling, inhibited starches as otherwise described herein, the sedimentation volume is in the range of 27-32 mL/g, and the % solubles value is in the range of 19-24% (e.g., 20-24%, 21-24%, 19-23%, 20-23%, or 21-24%).

As described above, the inhibited starches described herein have delayed-gelling characteristics. The delayed-gelling, inhibited starches as otherwise described herein have a gel time of at least 4 hours after being cooked in pH 6.5 phosphate buffer containing 1% NaCl at 5% starch solids for 20 minutes at 95 °C, then being allowed to sit undisturbed at 25 °C. In certain such embodiments, the delayed-gelling, inhibited starch has a gel time of at least 6 hours, or at least 10 hours.

While the delayed-gelling, inhibited starches described herein have delayed gel times, in certain desirable embodiments they do form a gel. The delayed-gelling, inhibited starches as otherwise described herein have a gel time of no more than 24 hours after being cooked in pH 6.5 phosphate buffer containing 1% NaCl at 5% starch solids for 20 minutes at 95 °C, then being allowed to sit undisturbed at 25 °C. For example, in certain such embodiments, the delayed-gelling, inhibited starches as otherwise described herein have a gel time of no more than 20 hours, no more than 18 hours, or no more than 16 hours after being cooked in pH 6.5 phosphate buffer containing 1% NaCl at 5% starch solids for 20 minutes at 95 °C, then being allowed to sit undisturbed at 25 °C.

The gel time is the time at which the material becomes a gel, as defined by the time when the storage modulus (G') becomes the same as the loss modulus (G"), i.e., when the value of tan(δ) becomes 1. Moduli can be measured by oscillatory rheometry at 1 Hz as is conventional in the art.

The delayed-gelling, inhibited starches described herein can be made with relatively little color. For example, certain embodiments of the delayed-gelling, inhibited starches as otherwise described herein have a Yellowness Index of no more than 10, for example, in the range of 3-10 or 5-10. In certain desirable embodiments, the Yellowness Index is less than 8 (e.g., 3-8 or 5-8). Yellowness Index is determined via ASTM E313.

Notably, the delayed-gelling, inhibited starches described herein can be made without many of the conventional chemical modifiers used in making conventional modified and/or inhibited starches. Accordingly, in certain desirable embodiments, the delayed-gelling, inhibited starches described herein can be marked as so-called "clean-label" starches. For example, a delayed-gelling, inhibited starch as otherwise described herein is not hydroxypropylated. A delayed-gelling, inhibited starch as otherwise described herein is not acetylated. A delayed-gelling, inhibited starch as otherwise described herein is not acetylated. A delayed-gelling, inhibited starch as otherwise described herein is not carboxymethylated. A delayed-gelling, inhibited starch as otherwise described herein is not hydroxyethylated. A delayed-gelling, inhibited starch as otherwise described herein is not phosphated. A delayed-gelling, inhibited starch as otherwise described herein is not succinated (e.g., not octenylsuccinated). The starch is not cationic or zwitterionic.

Similarly, the delayed-gelling, inhibited starches described herein can be made without use of the cross-linkers typically used in the inhibition of starch. A delayed-gelling, inhibited starch as otherwise described herein is not crosslinked with phosphate (e.g., using phosphorus oxychloride or metaphosphate). A delayed-gelling, inhibited starch as otherwise described herein is not crosslinked with adipate. A delayed-gelling, inhibited starch as otherwise described herein is not crosslinked with epichlorohydrin. A delayed-gelling, inhibited starch as otherwise described herein is not crosslinked with acrolein.

And the delayed-gelling, inhibited starches of the disclosure can be made without using other harsh chemical treatments common in the art. A delayed-gelling, inhibited starch as otherwise described herein is not bleached or oxidized with peroxide or hypochlorite.

In certain embodiments (but, as described below, not in all embodiments), the delayed-gelling, inhibited starches as otherwise described herein are made by pH-adjustment of starch to neutral or basic pH using a medium that is more than 70% water (e.g., more than 20% water or even more than 10% water), drying of the starch and heat treatment of the dried starch.

The delayed-gelling, inhibited starches of the disclosure can be made without dextrinization, and as such do not contain substantial amounts of the repolymerized branched chains typical of dextrins. A delayed-gelling, inhibited starch as otherwise described herein substantially lacks 1,2- and 1,3- branching. Such branching can be determined using nuclear magnetic resonance techniques familiar to the person of ordinary skill in the art.

The delayed-gelling starches of the present disclosure can have a variety of viscosities as measured by a Rapid Visco Analyzer. For example, in certain embodiments a delayed-gelling, inhibited starch as otherwise described herein can have a viscosity as measured by RVA is in the range of 50-1500 cP. In certain such embodiments, the viscosity as measured by RVA is in the range of 50-1000 cP, 50-850 cP, 50-700 cP, 50-500 cP, 50-400 cP, 50-300 cP, 50-200 cP, 100-1100 cP, 100-1000 cP, 100-850 cP, 100-700 cP, 100-500 cP, 100-400 cP, 100-300 cP, 200-1100 cP, 200-1000 cP, 200-850 cP, 200-700 cP, 200-500 cP, 400-1100 cP, 400-1000 cP, 400-850 cP, 400-700 cP, 600-1100 cP, or 600-850 cP, 700-1500 cP, or 700-1300 cP. The viscosity is measured by RVA at 5% solids in a pH 6.5 phosphate buffer containing 1% NaCl at a stir rate of 160 rpm. The initial temperature of the analysis is 50 °C; the temperature is ramped linearly up to 90 °C over 3 minutes, then held at 95 °C for 20 minutes, then ramped linearly down to 50 °C over 3 minutes, then held at 50 °C for 9 minutes, after which time the viscosity is measured. Notably, when a pasting peak is displayed at times of about 2-5 minutes, the final viscosity measured is higher than the pasting peak viscosity. When the pasting peak is absent, the viscosity during the 95 °C hold is flat, or increases.

As noted above, the delayed-gelling, inhibited starches of the disclosure are not pregelatinized.

In certain embodiments, the delayed-gelling, inhibited starches of one aspect of the disclosure remain substantially granular upon cooking. As used herein, granularity is determined by cooking the starch at 5% solids in the salted buffer by suspending a container containing the slurry in a 95 °C water bath and stirring with a glass rod or metal spatula for 6 minutes, then covering the container and allowing the paste to remain at 95 °C for an additional 20 minutes, then allowing the paste to cool to room temperature. Following such cooking, swollen but intact granules can be observed microscopically. The person of ordinary skill in the art would understand that minor deviations from granularity are allowed. For example, in certain embodiments of the delayed-gelling, inhibited starches as otherwise described herein, no more than 30% of the starch granules become non-intact upon cooking (i.e. as described above with respect to granularity). In certain such embodiments, no more than 20% or even no more than 10% of the starch granules become non-intact upon cooking (i.e., as described above with respect to granularity). The person of ordinary skill in the art can determine whether starch granules remain intact by viewing them under a microscope (e.g., with staining), as is conventional in the art.

The delayed-gelling, inhibited starches according to certain embodiments of the disclosure are shear stable, and thus can be suitable for a wide variety of process conditions.

Certain desirable embodiments of the delayed-gelling, inhibited starches as described herein are substantially digestible. For example, in certain embodiments of the delayed-gelling, inhibited starches as otherwise described herein, the amount of fiber is less than 10% as determined by AOAC 2001.03. In certain such embodiments, the amount of fiber is less than 5% or even less than 2%.

As noted above, the delayed-gelling starches of the first aspect of the disclosure are inhibited. As used herein, "inhibited" means that the starches are inhibited from gelatinization (i.e., similar to conventional cross-linked starches). Inhibited starches may vary with respect to their degree of inhibition, as characterized by their observed viscosity and other characteristics under the RVA analysis cooking conditions described herein. A starch that is substantially completely inhibited will resist gelatinization. A starch that is highly inhibited will swell to a limited extent and show a continuing rise in viscosity, but will not attain a peak viscosity. A starch that is moderately inhibited will exhibit a lower peak viscosity and a lower percentage breakdown in viscosity compared to the same starch that is not inhibited. A starch that is lightly inhibited will show a slight increase in peak viscosity, and a lower percentage breakdown in viscosity compared to control (uninhibited) starch.

The delayed-gelling, inhibited starches of the disclosure may be made using a variety of methodologies. A variety of starch feedstocks can be used (e.g., a native starch such as a tapioca starch, a dent corn starch, a wheat starch or a rice starch). The starch feedstock can be pre-treated, for example, to reduce the amount of lipid and/or protein present in the starch, as is conventional in the art.

In certain embodiments, the starches are made using the methods described in International Patent Application Publication no. WO 2013/173161, which is hereby incorporated herein by reference in its entirety. Thus, a method for making the starches described herein can include
a) heating a non-pregelatinized granular starch in an alcoholic medium in the presence of a base at a temperature of at least 35°C;
b) neutralizing the base with an acid;
c) separating the inhibited non-pregelatinized granular starch from the alcoholic medium; and
d) removing alcohol solvent from the inhibited non-pregelatinized granular starch, e.g., by heating or with steam.

The alcoholic medium generally comprises at least one alcohol, particularly a C1-C4 monoalcohol such as methanol, ethanol, n-propanol, isopropanol, n-butanol, t-butyl alcohol and the like. One or more other substances may also be present in the alcoholic medium, such as a non-alcoholic organic solvent (particularly those that are miscible with the alcohol) and/or water. However, in one embodiment of the method the alcoholic medium does not contain any solvent other than alcohol and, optionally, water. Aqueous alcohols, for example, may be used to advantage. The alcoholic medium may comprise, for instance, 30% to 100% by weight alcohol (e.g., ethanol) and from 0% to 70% by weight water. In one embodiment, the alcoholic medium contains from 80% to 96% by weight alcohol (e.g., ethanol) and from 4% to 20% by weight water, the total amount of alcohol and water equaling 100%. In another embodiment, the alcoholic medium contains 90% to 100% by weight alcohol (e.g., ethanol) and from 0% to 10% by weight water, the total amount of alcohol and water equaling 100%. In other embodiments, not more than 10% or not more than 15% by weight water is present in the alcoholic medium. The quantity of alcoholic medium relative to starch is not considered to be critical, but typically for the sake of convenience and ease of processing sufficient alcoholic medium is present to provide a stirrable and/or pumpable slurry. For example, the weight ratio of starch: alcoholic medium may be from about 1 : 2 to about 1 : 6.

In certain methods, at least some amount of treatment agent (base and/or salt) is present when the starch feedstock is heated in the alcoholic medium. However, it is advantageous that large amounts of treatment agent (relative to starch) need not be used in order to achieve effective inhibition of the starch, in contrast to previously known starch modification processes. This simplifies the subsequent processing of the inhibited starch and lowers potential production costs. Typically, at least 0.5% by weight of treatment agent (based on the dry weight of starch used) is employed, although in other embodiments at least 1%, at least 2%, at least 3%, at least 4% or at least 5% by weight of treatment agent is present. For economic reasons, generally no more than 10% or 15% by weight of treatment agent is present.

Typically, the mixture of starch, alcoholic medium and treatment agent is in the form of a slurry. In certain embodiments, it may be desirable to adjust the pH of the slurry to a particular value. It can be difficult to measure the pH of such a slurry due to the presence of the alcohol. In an embodiment where it is desired to make the slurry basic by adding a base, a suitable amount of base can be determined as if the slurry is a slurry of starch in deionized water alone and then scaled up to the actual amount while keeping the same ratio of base and starch.

The slurry may, for example, be neutral (pH 6 to 8) or basic (pH greater than 8). In one embodiment, the pH of the slurry is at least 6. In another embodiment, the pH of the slurry is at least 7. The slurry pH in another embodiment is not more than 12. In other embodiments, the pH of the slurry is 6-10, 7.5-10.5 or 8-10. In still other embodiments, the pH of the slurry is 5-8 or 6-7.

The alcohol-treatment agent treatment of the starch may be effected by first placing the starch in the alcoholic medium and then adding treatment agent (e.g., base and/or salt). Alternatively, the treatment agent may be first combined with the alcoholic medium and then contacted with the starch. The treatment agent may be formed in situ, such as by separately adding a base and an acid which react to form the salt which functions as the treatment agent.

Suitable bases for use in the process include, but are not limited to, alkali metal and alkaline earth metal hydroxides such as potassium hydroxide, calcium hydroxide and sodium hydroxide, alkali metal and alkaline earth metal carbonates such as sodium carbonate, potassium carbonate, sodium bicarbonate, and calcium carbonate, alkali metal and ammonium salts of phosphorus-containing acids such as tetrasodium pyrophosphate, ammonium orthophosphate, disodium orthophosphate, and trisodium phosphate, and any other bases approved for use under the applicable regulatory laws. Strong bases as well as weak bases may be utilized.

Suitable salts for use in these methods include water-soluble substances which ionize in aqueous solution to provide a substantially neutral solution (i.e., a solution having a pH of from 6 to 8). Alkali metal-containing salts are particularly useful, as are salts of organic carboxylic acids (e.g., a sodium or potassium salt) such as acetic acid, adipic acid, itaconic acid, malonic acid, lactic acid, tartaric acid, citric acid, oxalic acid, fumaric acid, aconitic acid, succinic acid, oxalosuccinic acid, glutaric acid, ketoglutaric acid, malic acid, fatty acids and combinations thereof.

Mixtures of different treatment agents may be used. For example, the starch may be heated in the alcoholic medium in the presence of both at least one base and at least one salt.

The starch, alcoholic medium and treatment agent are heated for a time and at a temperature effective to inhibit the starch to the desired extent. Generally speaking, temperatures in excess of room temperature (i.e., 35°C or greater) will be necessary. At the same time, extremely high temperatures should be avoided. The heating temperature can be, for example, 35°C to 200°C. Typically, temperatures of from 100 °C to 190 °C, 120 °C to 180 °C, or from 130 °C to 160 °C, or from 140°C to 150°C will be sufficient. The heating time generally is at least 5 minutes but no more than 20 hours and typically 40 minutes to 2 hours. In general, a desired level of starch inhibition may be achieved more rapidly if the heating temperature is increased.

The specific conditions of time of treatment, temperature of treatment, and proportions of the components of the mixture of starch, alcoholic medium and treatment agent are generally selected such that the starch is not gelatinized to a significant extent. That is, the starch remains non-pregelatinized as described above.

When the temperature selected for the heating step exceeds the boiling point of one or more components of the alcoholic medium, it will be advantageous to carry out the heating step in a vessel or other apparatus capable of being pressurized. The treatment may be conducted within a confined zone in order to maintain the alcoholic medium in a liquid state. Additional positive pressure could be employed, but is generally not necessary. The starch may be slurried in the alcoholic medium together with the treatment agent under conditions of elevated temperature and pressure and treated for a time sufficient to change the starch's viscosity characteristics. Such treatment may be conducted in a stirred tank reactor on a batch basis or in a tubular reactor on a continuous basis, although other suitable processing techniques will be apparent to those skilled in the art. In another embodiment, the starch may be in the form of a bed within a tubular reactor and a mixture of the alcoholic medium and treatment agent passed through such bed (optionally, on a continuous basis), with the bed being maintained at the desired temperature to effect inhibition of the starch.

In embodiments in which a base has been utilized as a treatment agent, the mixture of starch, alcoholic medium and base may be combined with one or more acids, once the heating step is completed, for the purpose of neutralizing the base. Suitable acids for use in such neutralization step include, but are not limited to, phosphorus-containing acids such as phosphoric acid, carboxylic acids such as acetic acid, adipic acid, itaconic acid, malonic acid, lactic acid, tartaric acid, oxalic acid, fumaric acid, aconitic acid, succinic acid, oxalosuccinic acid, glutaric acid, ketoglutaric acid, malic acid, citric acid, fatty acids and combinations thereof, as well as other types of acids such as uric acid. If the inhibited starch is intended for use as a food ingredient, the acid generally should be selected to be one that is permitted for such use under applicable regulations. Typically, sufficient acid is added to lower the pH of the mixture to about neutral to slightly acidic, e.g., a pH of from about 5 to about 7 or from about 6 to about 6.5.

The neutralization with acid may be carried out at any suitable temperature. In one embodiment, the slurry of starch, base and alcoholic medium is cooled from the heating temperature used to approximately room temperature (e.g., about 15°C to about 30°C) prior to being combined with the acid to be used for neutralization. The neutralized mixture may thereafter be further processed as described below to separate the inhibited starch from the alcoholic medium. In another embodiment, however, neutralization of the base is followed by further heating of the starch slurry. Such further heating has been found to be capable of modifying the rheological properties of the inhibited starch obtained, as compared to the viscosity characteristics of an analogously prepared starch that has not been subjected to heating after neutralization of the base.

Generally speaking, such further heating step is advantageously carried out at temperatures in excess of room temperature (i.e., 35°C or greater). At the same time, extremely high temperatures should be avoided. The heating temperature can be, for example, 35°C to 200°C. Typically, temperatures of from 100°C to 190°C, 120°C to 180°C, or from 130°C to 160°C, or from 140°C to 150°C will be sufficient. The heating time generally is at least 5 minutes but no more than 20 hours and typically 40 minutes to 2 hours.

The mixture of starch and alcoholic medium may be processed so as to separate the starch from the alcoholic medium. Conventional methods for recovering particulate solids from liquids such as filtration, decantation, sedimentation or centrifugation may be adapted for such purpose. The separated starch may optionally be washed with additional alcoholic medium and/or alcohol and/or water to remove any undesired soluble impurities. In one embodiment, neutralization of residual base is accomplished by washing the recovered starch with an acidified liquid medium. Drying of the separated starch will provide an inhibited non-pregelatinized granular starch in accordance with the disclosure. For example, drying may be performed at a moderately elevated temperature (e.g., 30°C to 60°C) in a suitable apparatus such as an oven or a fluidized bed reactor or drier or mixer. Vacuum and/or a gas purge (e.g., a nitrogen sweep) may be applied to facilitate removal of volatile substances (e.g., water, alcohol) from the starch. The resulting dried inhibited non-pregelatinized granular starch may be crushed, ground, milled, screened, sieved or subjected to any other such technique to attain a particular desired particle size. In one embodiment, the inhibited starch is in the form of a free-flowing, granular material.

In one embodiment, however, the starch is subjected to a desolventization step at a significantly higher temperature (e.g., greater than 80°C or greater than 100°C or greater than 120°C). Excessively high temperatures should be avoided, however, since degradation or discoloration of the starch may result. Such a step not only reduces the amount of residual solvent (alcohol) in the product but also provides the additional unexpected benefit of enhancing the degree of inhibition exhibited by the starch. Desolventization temperatures can, for example, be about 100°C to about 200°C. Typical temperatures are 120°C to 180°C or 150°C to 170°C. The desolventization may be carried out in the presence or in the absence of steam. Steam treatment has been found to be advantageous in that it helps to minimize the extent of starch discoloration which may otherwise occur at such an elevated temperature. In one embodiment, steam is passed through a bed or cake of the inhibited starch. The starch desolventization methods of U.S. Pat. No. 3,578,498, incorporated herein by reference in its entirety for all purposes, may be adapted for use. Following steam treatment, the inhibited starch may be dried to reduce the residual moisture content (e.g., by heating in an oven at a temperature of from about 30°C to about 70°C or in a fluidized bed reactor).

In one embodiment, the treated starch, which has been recovered from the alcoholic medium, is first brought to a total volatiles content of not more than about 35% by weight or not more than about 15% by weight. This can be accomplished, for example, by first air or oven drying the recovered starch at moderate temperature (e.g., 20°C to 70°C) to the desired initial volatiles content. Live steam is then passed through the dried starch, the system being maintained at a temperature above the condensation point of the steam. A fluid bed apparatus may be used to perform such a steam desolventization step.

In general, it will be desirable to carry out desolventization under conditions effective to result in a residual alcohol content in the inhibited starch of less than 1 weight % or less than 0.5 weight % or less than 0.1 weight %.

Following desolventization, the inhibited starch may be washed with water and then re-dried to further improve color and/or flavor and/or reduce the moisture content.

Of course, the person of ordinary skill in the art can use other methodologies to arrive at the starches described herein. The starch feedstock can, for example, be subjected to a pH adjustment and heated. The pH adjustment can be performed by contacting a pH-adjusting agent with the starch; examples of pH-adjusting agents include formic acid, acetic acid, propionic acid, butyric acid, oxalic acid, lactic acid, malic acid, citric acid, fumaric acid, succinic acid, glutaric acid, malonic acid, tartaric acid and carbonic acid, as well as their alkali metal salts (e.g., potassium and/or sodium salts). The pH-adjusting agent can be contacted with the starch feedstock in any convenient fashion, e.g., as a slurry in liquid (e.g., water, alcohol (e.g., as described above, including ethanol or isopropanol), including aqueous alcohol such as aqueous ethanol, or another solvent); in dry form; in damp form (e.g., in a mist in a solvent (such as water, aqueous ethanol, or another solvent); or in the form of a damp dough of the starch (e.g., with water, aqueous ethanol, or another solvent). And when an alkali metal salt of an acid is to be used, it can be formed in situ, e.g., by adding the acid and an alkali metal hydroxide or carbonate in separate steps.

The pH adjustment can be performed to yield a variety of pH values. For example, in certain embodiments, and as described in WO 2013/173161, the pH adjustment can be performed to yield a pH in the range of 7-10. In other, alternative embodiments, the pH adjustment can be performed to yield a pH in the range of 3-7, e.g., in the range of 3-6, or 3-5, or 3-4, or 4-7, or 4-6, or 5-7, or 5-6, or about 3, or about 3.5, or about 4, or about 4.5, or about 5, or about 5.5, or about 6, or about 6.5, or about 7. When the pH adjustment is performed in a slurry, the pH of the slurry is the relevant pH. When the pH adjustment is performed in a substantially non-liquid form (e.g., a dough, or in damp solid), the pH of the solid material at 38% in water is the relevant pH. The amount of the pH-adjusting agent relative to the starch can vary, for example, from 0.05-30 wt% on a dry solids basis, e.g., 0.05-20 wt%, 0.05-10 wt%, 0.05-5 wt%, 0.05-2 wt%, 0.05-1 wt%, 0.05-0.5 wt%, 0.2-30 wt%, 0.2-20 wt%, 0.2-10 wt%, 0.2-5 wt%, 0.2-2 wt%, 0.2-1 wt%, 1-30 wt%, 1-20 wt%, 1-10 wt%, 1-5 wt%, 5-30 wt% or 5-20 wt%. Desirably, the pH adjusting agent is mixed thoroughly with the starch feedstock. This will require different process conditions depending on the form in which the pH adjustment is performed. If the pH adjustment is performed in a slurry, simply stirring the slurry for a few minutes may be sufficient. If the pH adjustment is performed in a drier form (e.g., in a damp solid or a dough), more substantial contacting procedures may be desirable. For example, if a solution of the pH-adjusting agent is sprayed onto dry starch feedstock, it can be desirable to mix for about 30 minutes then store for at least a few hours.

After the pH-adjusting agent is contacted with the starch, the starch can be heated (i.e. while still in contact with pH-adjusting agent). The starch can be, for example, heated at a temperature in the range of 120-200 °C, e.g., 120-180 °C, or 120-160 °C, or 120-140 °C, or 140-200 °C, or 140-180 °C, or 140-160 °C, or 160-200 °C, or 160-180 °C, or 180-200 °C. The starch can be heated for up to, for example, 8 hours. The starch can be heated in a variety of forms. For example, the starch can be heated in alcohol or nonaqueous solvent slurry (e.g., under pressure if the boiling point of the solvent not sufficiently above the heating temperature); as a dough of starch, water, and non-water solvent to suppress granular swelling (e.g., as disclosed in WO 2013/173161), or in a dry state (solvent can be removed using conventional techniques such as filtration, centrifugation and/or heat-drying, e.g. as described above with respect WO 2013/173161). The starch can be dried as a result of the heating process; a separate drying step is not necessary.

As the person of ordinary skill in the art will appreciate, the starch feedstock may be purified, e.g., by conventional methods, to reduce undesirable flavors, odors, or colors, e.g., that are native to the starch or are otherwise present. For example, methods such as washing (e.g., alkali washing), steam stripping, ion exchange processes, dialysis, filtration, bleaching such as by chlorites, enzyme modification (e.g., to remove proteins), and/or centrifugation can be used to reduce impurities. The person of ordinary skill in the art will appreciate that such purification operations may be performed at a variety of appropriate points in the process.

Another aspect of the disclosure is a cold water swelling, delayed-gelling starch made by a process comprising providing a non-pregelatinized starch as described herein, and subjecting it to any of the processes described (specifically or generically) in U.S. Patent no. 4465702. For example, the process can include subjecting a non-pregelatinized starch of the disclosure, slurried in aqueous C2-C3 alkanol, to conditions of high temperature (e.g., 149-182 °C (300-360 °F)) and pressure (e.g., at or above autogenic pressure, e.g., 2.76 mPa-4.14 MPa (400-600 psig). Such treatment can be performed, for example, 1-30 minutes.

In either instance, the first step in carrying out the process is the preparation of a slurry comprised of about 10 to about 25 parts by weight dry substance basis (dsb) of an ungelatinized corn starch in a liquid medium comprised of about 50 to about 75 parts by weight of an alcohol selected from ethanol, denatured ethanol, propanol and isopropanol and about 13 to about 30 parts by weight of water, provided that the liquid medium for the slurry contains about 15 to about 35% by weight of water inclusive of the water in the starch (i.e., the weight ratio of alcohol to water is about 5.7:1 to 1.9:1). Preferably the slurry is comprised of about 12 to about 20% by weight of starch (dsb) and about 17 to about 30% water.

Flavor and toxicity problems, which may be associated with the use of propanol and/or isopropanol in the processing of food acceptable starch products, are avoided when ethanol is used as the alcohol component of the process slurry. It is noted, however, that from a functional point of view, that is, in terms of producing a granular starch product exhibiting cold-water solubility and gelling characteristics, isopropanol performs as well as ethanol and denatured ethanol.

The aforedescribed slurry of an ungelatinized corn starch in an aqueous alcohol medium is heated to a temperature of about 149 to about 182 °C (about 300° to about 360° F). under autogenic pressure for about 1 to about 30 minutes. The heating process can be conducted as a batch process in a sealed vessel or as a continuous or semi-continuous process by passing the slurry through a heated confined zone at a rate calculated to give a residence time for the slurry in the heated zone of about 1 to about 30 minutes. Preferably the starch slurry is heated to a temperature of about 157 °C to about 177 °C (about 315 °F to about 350° F). for a period of about 1 to about 10 minutes to convert the ungelatinized corn starch to the present cold-water-swelling starch having high cold-water solubility. In a most preferred embodiment of the present process, the ungelatinized corn starch slurry contains about 12 to about 20% by weight of starch (dsb) and the liquid medium for the slurry contains about 18 to about 26% by weight of water (i.e., the weight ratio of alcohol to water is about 4.6:1 to 2.8:1); conversion of the ungelatinized corn starch to the present cold-water-swelling/soluble starch is accomplished by heating the slurry to a temperature of about 163 °C to about 171 °C (about 325° to about 340° F). for a period of about 2 to about 5 minutes.

After the heating step, the slurry is preferably cooled to below about 120° F., and the product cold-water-swelling granular starch is separated from the liquid medium component of the slurry by filtration or centrifugation. Following the recovery of the starch product from the reaction slurry, the starch is typically washed with 1 or more volumes of the alcohol used in the process, and dried and/or desolventized by conventional methods. For example, the starch can be dried in an oven to a certain volatiles level and then contacted with a hot humid gas, preferably moist air or steam, while the starch is maintained at a temperature from about 60 °C to about 121 °C (about 140° to about 250° F). for a time sufficient to reduce the alcohol content of the starch to a food acceptable level.

The cold water swelling, delayed-gelling starch so prepared can have, for example, an amylose content in the range of 15-30% (or any other amylose content as described above); a % solubles in the range of 13-30% (or any other % solubles as described above); and a gel time of at least 4 hours after being cooked in pH 6.5 phosphate buffer containing 1% NaCl at 5% starch solids for 20 minutes at 95 °C, then being allowed to sit undisturbed at 25 °C (or any other gel time as described above).

Another aspect of the disclosure is a cold water swelling, delayed-gelling starch, having
an amylose content in the range of 15-25%;
a sedimentation volume; and
a % solubles value;
wherein a point corresponding to (sedimentation volume, % solubles value) in a plot of % solubles value vs. sedimentation volume falls within the polygon defined by the set of points (19.1 mL/g, 14.1%), (18.1 mL/g, 17.3%), (33.2 mL/g, 26.9%) and (35.7 mL/g, 21.1%), when the sedimentation volume is measured as disclosed in the description and the % solubles value is measured as disclosed in the description;
wherein the starch is not pregelatinized, is not hydroxypropylated, is not acetylated, is not carboxymethylated, is not hydroxyethylated, is not phosphated, is not succinated, is not cationic or zwitterionic, is not crosslinked with phosphate, is not crosslinked with adipate, is not crosslinked with epichlorohydrin, is not crosslinked with acrolein, is not bleached or oxidized with peroxide or hypochlorite, is not dextrinized, does not contain substantial amounts of the repolymerized branched chains typical of dextrins, and substantially lacks 1,2- and 1,3- branching; and
wherein the starch has a gel time of at least 4 hours and no more than 24 hours after being cooked in pH 6.5 phosphate buffer containing 1% NaCl at 5% starch solids for 20 minutes at 95 °C, then being allowed to sit undisturbed at 25 °C. Such cold water swelling, delayed-gelling starch can be made by any of a variety of conventional processes.

In various embodiments, the cold water swelling, delayed-gelling starches of the disclosure can have the properties described above with respect to the delayed-gelling, inhibited starches (e.g., identity of starch; % solubles; gel times; Yellowness Index; chemical treatments and modifications; dextrinization and branching; viscosity; digestibility).

Another aspect of the disclosure is a method for making a food product. The method includes cooking a starch as described herein the presence of water; and providing the cooked starch in combination with one or more other food ingredients. For example, a starch as described herein can be combined with one or more other food ingredients that include water, and cooking the combination of the starch and the food ingredients. In particular embodiments, the method includes pasteurization, retorting, kettle or batch cooking, or ultra-high temperature processing. Advantageously, when the food product is cooked, it can take a longer time to gel, and thus allow for longer times to hold cooked product, to convey cooked product (e.g., by pumping), and to fill cooked product into containers before the product sets to gel.

Accordingly, yet another aspect of the disclosure is a food product including a starch as described herein, e.g., in a cooked, gelled form.

The food product can be, for example, a tomato-based product, a gravy, a sauce, a soup, a pudding, a salad dressing, a yogurt, a sour cream, a cheese, or a fruit filling or topping. A variety of cooking methods can be used, for example, pasteurization, retorting, kettle cooking, batch cooking and ultra-high temperature processing. The cooking is desirably sufficient to substantially convert the starch to a gel form. Advantageously, the starches described herein can take a longer time to gel, and thus allow for longer times to hold cooked product, to convey cooked product (e.g., by pumping), and to fill cooked product into containers before the product sets to gel. Notably, the starches described herein can be used as replacement for gelatin in gelled foods.

With respect to yogurt and other cultured dairy products, advantageously, the starches described herein can gel slowly enough that the product can be cultured, pumped into a container, and only then allowed to gel. Accordingly, a method for making a cultured dairy product (e.g., yogurt, sour cream, crème fraiche) can include providing a dairy mixture comprising a dairy feed and a starch as described herein; culturing the dairy mixture to provide a cultured dairy product (e.g., for at least 2 hours, at least 4 hours, or at least 6 hours); transferring the cultured dairy product to a container in an ungelled state; and allowing the cultured dairy product to gel in the container.

In other embodiments, the food product is a baked good, e.g., a bread, a pastry, a pie crust, a donut, a cake, a biscuit, a cookie, a cracker, or a muffin. In such embodiments, the cooking can include baking. In some embodiments, the use of the starches described herein in a baked good (i.e., in the dough or batter thereof) can help reduce staling. In other embodiments, the starch can be included in, e.g., a filling inside the baked good.

The starches described herein can be used in a wide variety of other foods. For example, in certain embodiments of the starches and methods of the disclosure, the starch is used in a food selected from baked foods, breakfast cereal, anhydrous coatings (e.g., ice cream compound coating, chocolate), dairy products, confections, jams and jellies, beverages, fillings, extruded and sheeted snacks, gelatin desserts, snack bars, cheese and cheese sauces, edible and water-soluble films, soups, syrups, sauces, dressings, creamers, icings, frostings, glazes, tortillas, meat and fish, dried fruit, infant and toddler food, and batters and breadings. The starches described herein can also be used in various medical foods. The starches described herein can also be used in pet foods.

A variety of other food products can advantageously be made using the starches of the present disclosure. For example, food products in which the starches of the present disclosure are useful include thermally- processed foods, acid foods, dry mixes, refrigerated foods, frozen foods, extruded foods, oven-prepared foods, stove top-cooked foods, microwaveable foods, full-fat or fat- reduced foods, and foods having a low water activity. Food products in which the starches of the present disclosure are particularly useful are foods requiring a thermal processing step such as pasteurization, retorting, or ultra-high temperature (UHT) processing. The starches of the present disclosure are particularly useful in food applications where stability is required through all processing temperatures including cooling, freezing and heating.

Based on processed food formulations, the practitioner may readily select the amount and type of the starches of the present disclosure required to provide the necessary thickness and gelling viscosity in the finished food product, as well as the desired texture. Typically, the starch is used in an amount of 0.1-35%, e.g., 2-6%, by weight, of the food product.

Among the food products which may be improved by the use of the starches of the present disclosure are high acid foods (pH <3.7) such as fruit-based pie fillings, baby foods, and the like; acid foods (pH 3.7-4.5) such as tomato-based products; low acid foods (pH >4.5) such as gravies, sauces, and soups; stove top- cooked foods such as sauces, gravies, and puddings; instant foods such as puddings; pourable and spoonable salad dressings; refrigerated foods such as dairy or imitation dairy products (e.g., yogurt, sour cream, and cheese); frozen foods such as frozen desserts and dinners; microwaveable foods such as frozen dinners; liquid products such as diet products and hospital foods; dry mixes for preparing baked goods, gravies, sauces, puddings, baby foods, hot cereals, and the like; and dry mixes for predusting foods prior to batter cooking and frying. The starches of the present disclosure are also useful in preparing food ingredients such as encapsulated flavors and clouds.

In other embodiments, the food product is a confection.

The starches of the present disclosure may also be used in various non-food end use applications where chemically modified (crosslinked) inhibited starches have conventionally been utilized, such as cosmetic and personal care products, paper, packaging, pharmaceutical formulations, adhesives, and the like.

Another aspect of the disclosure is a dry mix comprising a starch as described herein, in admixture with one or more food ingredients. When the dry mix is cooked (i.e. in the presence of water), it can take a longer time to gel, and thus allow for longer times to hold cooked product, to convey cooked product (e.g., by pumping), and to fill cooked product into containers before the product sets to gel. The dry mix can be, for example, a dry mix for a baked good, e.g., a bread, a pastry, a pie crust, a donut, a cake, a biscuit, a cookie, a cracker, or a muffin.

### Examples

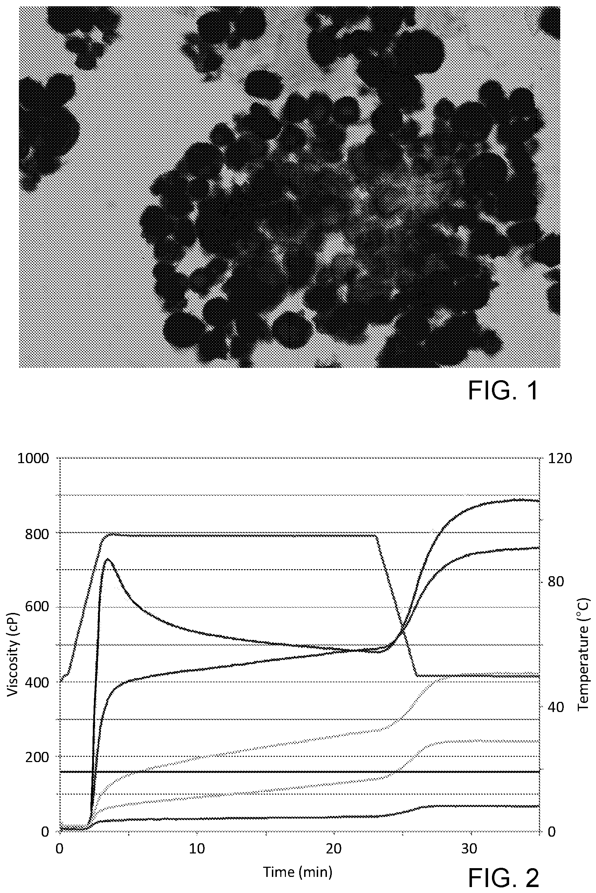

A delayed-gelling, inhibited tapioca starch according to the disclosure (sedimentation volume 25 mL/g, 20% solubles) was cooked as described above with respect to the RVA analysis and stained with iodine (tincture, 2%). A photomicrograph of the resulting cooked starch paste is shown in FIG. 1. As the person of ordinary skill in the art will appreciate, the individual starch granules evident in FIG. 1 are consistent with inhibition of the starch.

RVA cooking curves of various tapioca starches are provided in FIG. 2. The ramped-up and -down temperature program refers to the right-hand temperature scale, while the RVA curves refer to the left-hand viscosity scale. The traces are, top-to-bottom on the right side of the graph, for starches of sedimentation volumes of 35, 25, 22, 20 and 16 mL/g. The viscosity is measured by RVA at 5% solids in a pH 6.5 phosphate buffer containing 1% NaCl at a stir rate of 160 rpm. The initial temperature of the analysis is 50 °C; the temperature is ramped linearly up to 90 °C over 3 minutes, then held at 95 °C for 20 minutes, then ramped linearly down to 50 °C over 3 minutes, then held at 50 °C for 9 minutes, as shown on the graph of FIG. 2. The viscosity was measured throughout the heating and cooling cycle, and is plotted on the graph of FIG. 2.

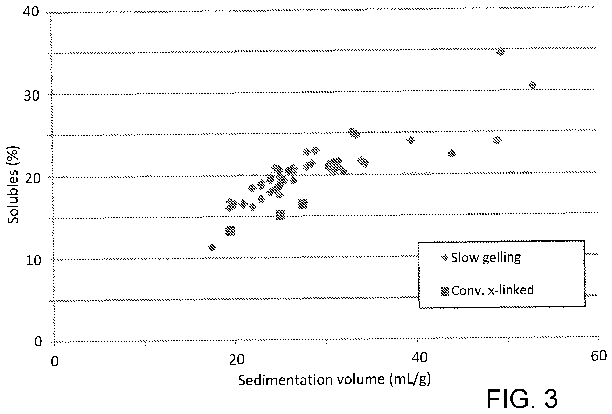

Sedimentation volumes and % solubles for a variety of tapioca starches of the disclosure were measured; a plot of sedimentation volume is provided as FIG. 3. The starches of the disclosure are identified as "slow gelling" starches, while conventional crosslinked tapioca starches (Comparative A and Comparative C, below) are identified as "conventional crosslinked" starches. Notably, the % solubles value for the starches decrease with decreasing sedimentation volume, as shown in the plot of FIG. 3.

To evaluate textural attributes, various starches of the disclosure and commercial tapioca starches were cooked at 6% solids in 1% NaCl aqueous solution. They were evaluated by panelists both on the day of cook, and the next day following overnight refrigeration. The sample set included seven delayed-gelling inhibited tapioca starches of the present disclosure, of a variety of sedimentation volumes. These samples are described in Table 1. The six commercially available tapioca starches included unmodified tapioca, two chemically cross-linked tapioca starches, and a tapioca starch cross-linked and viscosity-stabilized by the addition of hydroxypropyl substitution, as described in Table 2.

Table 1 gives properties of the reduced-gel rate starches. The range in sedimentation volumes of highest interest for food applications is typically considered to be 20-35 mL/g. Product color is included.

**Table 1. RVA final viscosity, sedimentation volumes (SV), and powder color for experimental starches**

| sample ID | RVA viscosity, cP | SV mL/g | color YI |
|---|---|---|---|
| 1 | 255 | 20 | 7.3 |
| 2 | 303 | 21 | 6.7 |
| 3 | 272 | 20 | 6.6 |
| 4 | 737 | 26 | 5.7 |
| 5 | 788 | 26.5 | 6.3 |
| 6 | 927 | 33 | 5.6 |
| 7 | 938 | 33 | 5.3 |

**Table 2. Description of modifications, RVA final viscosity, sedimentation volumes (SV), and powder color, for comparative tapioca starches.**

| Sample | Modification | RVA viscosity (cP) | Sedimentation volume (mL/g) | Color (Yellowness Index) |
|---|---|---|---|---|
| Comp. A | phosphate crosslinked | 430, 470 | 20 | 2.7 |
| Comp. B | hydroxypropyl, phosphate x-linked | 550 | 24 | 2.1 |
| Comp. C | phosphate crosslinked | 965 | 38 | 4.4 |
| Comp. D | none | | 100 | |

Comparative A is a phosphate crosslinked tapioca starch made by slurrying tapioca starch in water at 85 °C under alkaline conditions; adding 0.025% POCl₃ and allowing to react for 60 minutes, then neutralizing the slurry, and filtering, washing and drying the resulting crosslinked starch.

Comparative B is a hydroxypropyl-modified, phosphate crosslinked tapioca starch made by slurrying tapioca starch in water at 85 °C under alkaline conditions, adding propylene oxide and allowing to react to 2% hydroxypropyl substitution, then adding 0.01% POCl3 and allowing to react for 45 min, then neutralizing the slurry, and filtering, washing and drying the resulting crosslinked starch.

Comparative C is a phosphate crosslinked tapioca starch made by slurrying tapioca starch in water at 85 °C under alkaline conditions; adding 0.005% POCl₃ and allow to react for 60 minutes, then neutralizing the slurry, and filtering, washing and drying the resulting crosslinked starch.

### Textural Analyses:

Six novice panelists were divided into two groups. Each group evaluated the fresh starch pastes in the afternoon on the day of cook. The panel also evaluated the starch paste the next day. For the fresh cooked starch paste, the panelists evaluated
- Opacity
- Surface Shininess
- Firmness
- Press Elasticity
- Syneresis
- Interior surface shininess
- Graininess
- Jiggle Elasticity
- Thickness
- Stringiness
For the day-old starch paste (mostly gelled), the panelists evaluated
- Opacity
- Surface Shininess
- Firmness
- Press Elasticity
- Syneresis
- Interior surface shininess
- Graininess
- Jiggle Elasticity

Each attribute was rated on a 15 point line scale. References with different ratings were provided to each group. The references for each attributes are:
Opacity references: photo with opacity rating 0, 3, 8, 12, 15
Shininess references: photo paper with different shininess 2, 7.5, 10
Firmness references:
   - Firmness 4 - 5 grams of a cold-water-swelling, granular starch mixed with 15 grams of sucrose, hydrated in 80 grams of 1% NaCl water overnight.
   - Firmness 8 - 7 grams of a cold-water-swelling, granular starch mixed with 21 grams of sucrose, hydrated in 72 grams of 1% NaCl water overnight.
   - Firmness 12 - 9 grams of a cold-water-swelling, granular starch mixed with 27 grams of sucrose, hydrated in 64 grams of 1% NaCl water overnight.
Jiggle elasticity references: video clips with jiggle elasticity rating at 4, 8, 12
Graininess references: the graininess references for gelling starch are the photos of gelled starch at different graininess level 1, 5, 10, 15. The graininess references for thickening starch are the video clips of thickening starch at different graininess level 4, 8, 12
Thickness references: video clips with thickness rating at 3, 5, 8, 12
Stringiness: video clips with stringiness rating at 3, 6, 9

### Results:

A typical property of tapioca food starches is that they form soft gels. This is desirable for such applications as yogurt, dairy desserts, and fruit fillings. Some of the starches for these applications are conventionally cross-linked (inhibited) to give process tolerance, but not otherwise modified. For applications where gel formation is not desirable, and to improve freeze-thaw or storage stability, tapioca starches are conventionally further modified by the addition of side groups, such as hydroxypropyl. The bulky side groups prevent the starch molecules from associating to form gel networks. Unmodified tapioca, because it is not crosslinked, has no shear stability. The granules rupture upon cooking, giving the paste a stringy texture that is typically considered undesirable. Because tapioca is about 80% amylopectin, the paste is slow to set back. (It is believed that most of the extra-granular starch in cross-linked tapioca pastes is amylose, which is responsible for the gel formation.)

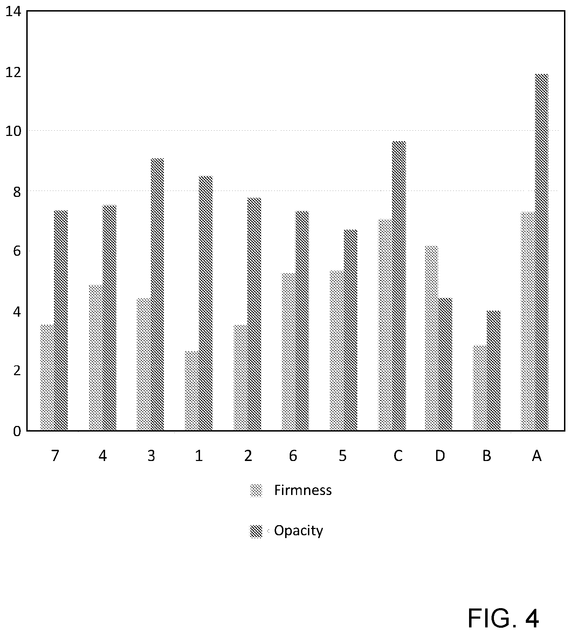

FIG. 4 is a bar graph showing firmness and opacity ratings on the day of cook, with firmness on the left of each pair, and opacity on the right of each pair. The comparative tapiocas, with the exception of the hydroxypropyl-stabilized Comparative B, have firmness ratings of 6-7. Comparative B's rating is 3. For these, opacity trends with firmness. It is reasonable to expect that the structure responsible for firm texture also scatters light. The starches of the present disclosure, on the other hand, have opacity values similar to the firmer commercial samples, but with firmness ratings closer to the hydroxypropyl -stabilized starch, ranging in score from 3 to 5.

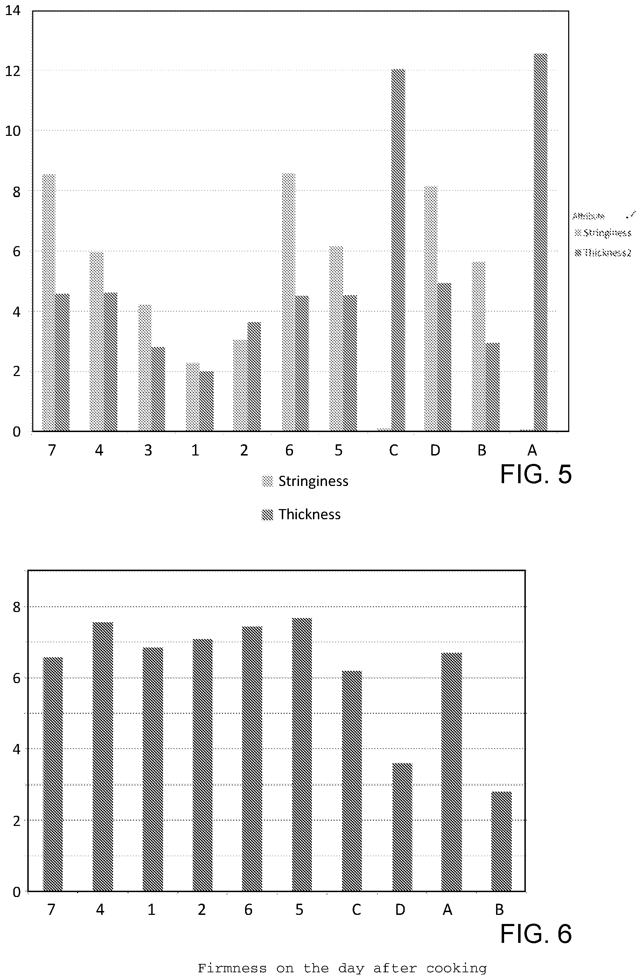

FIG. 5 is a bar graph showing the paste thickness (left) and stringiness (right) ratings on the same day as cooking. The commercial, cross-linked, non-stabilized starches have very thick textures with little stringiness. Comparative D and Comparative B have thin textures and considerable stringiness. The samples of the present disclosure are similar to Comparative D and Comparative B in paste thickness and stringiness on the day of cook.

For the comparative tapiocas, thickness and stringiness appear to be inversely related. The starches with highest thickness have little stringiness; the starches with lowest thickness have the highest stringiness. For the starches of the present disclosure, thickness and stringiness trend together. The starches with highest thickness have the highest stringiness, and vice versa. Thickness and stringiness trend with level of inhibition - samples 1, 2, and 3 are the most inhibited of the set, with SVs of 20 and 21, and have the lowest thickness and stringiness scores.

Following overnight refrigeration the commercial starches changed little, whereas the experimental starches changed dramatically. FIG. 6 is a bar graph showing the firmness ratings of certain starches the day following refrigeration. (The samples had been warmed to room temperature before evaluating.) The firmness values in this chart can be compared to those of FIG. 4. The firmness ratings of the crosslinked commercial starches remained between 6 and 7 while the hydroxypropyl-stabilized Comparative B remained at 3. (Comparative D dropped from 6 to 3.5.) The starches of the present disclosure, however, increased from 2-5 up to 6-8, and became the firmest samples in the set.

Similar trends were seen with other textural attributes that reflect gel formation. The surfaces of the pastes of the starches of the present disclosure were more reflective on the day of cook than the cross-linked commercial samples, whereas the cross-linked commercial samples were deemed to have a grainier texture than the experimental on the day of cook. Following overnight refrigeration, graininess had increased dramatically and surpassed the commercial samples, and the reflectiveness of the paste surfaces had decreased.

Principal component analysis (PCA) and factor loaded variance analysis were performed on the data. Analyzing a data set with PCA is meant to reduce confounds of common terms and eliminate redundancies and non-essential attributes in defining product in a product space. It looks for underlying structure in the data, and allows samples to be compared in terms of their principal components.

Table 3 shows the PCA data for the products on the day of cook. The first three components account for 87% of product variance (cumulative). Principal component (PC) 1 accounts for 55% of product variance. PC 2 and PC 3 account for 19% and 13% of product variance, respectively.

**Table 3. Principal Components Analysis of starches on the day of cook**

| Component | Eigenvalue | Difference | Proportion | Cumulative |
|---|---|---|---|---|
| 1 | 4.42 | 2.88 | 0.55 | 0.55 |
| 2 | 1.54 | 0.52 | 0.19 | 0.74 |
| 3 | 1.02 | 0.61 | 0.13 | 0.87 |
| 4 | 0.41 | 0.12 | 0.05 | 0.92 |
| 5 | 0.29 | 0.10 | 0.04 | 0.96 |
| 6 | 0.19 | 0.09 | 0.02 | 0.98 |
| 7 | 0.10 | 0.05 | 0.01 | 0.99 |
| 8 | 0.04 | | 0.01 | 1.00 |

Table 4 shows the attributes loading for each PC on the day of cook. A high absolute number means the attribute is loaded heavily on that PC. As seen in Table 4, PC1 is driven by firmness, thickness, jiggle elasticity, shininess, stringiness and opacity. PC2 is driven by graininess and, to a much lesser degree, syneresis.

**Table 4. Eigenvectors of starches on the day of cook**

| | Factor1 | Factor2 | Factor3 | Factor4 | Factor5 |
|---|---|---|---|---|---|
| opacity | 0.82 | 0.09 | -0.38 | 0.03 | -0.27 |
| shininess | -0.61 | 0.40 | 0.26 | 0.61 | -0.02 |
| firmness | 0.92 | 0.14 | -0.04 | 0.05 | 0.12 |
| Press elasticity | -0.75 | -0.38 | -0.24 | -0.15 | 0.36 |
| syneresis | 0.04 | 0.91 | -0.06 | -0.27 | 0.29 |
| graininess | 0.56 | -0.16 | 0.77 | -0.19 | 0.08 |
| Jiggle elasticity | 0.75 | -0.24 | -0.13 | 0.40 | 0.41 |

The data indicate that all the starches of the present disclosure are less firm, less thick, less jiggly, and less opaque than all of the non-stabilized commercial tapiocas. Samples 1, 2, 3, and 7 seem behave similarly to the hydroxypropyl-stabilized Comparative B on the day of cook. Samples 4 and 5 - the middle inhibition starches of the disclosure, seemed to behave similarly to each other.

Table 5 shows the PCA data for the products on the day after cook. The first three components account for 78% of product variance (cumulative). Principal component (PC) 1 accounts for 47% of product variance. PC 2 and PC 3 account for 18% and 13% of product variance, respectively.

**Table 5. Principal Components Analysis of starches on the day after cook**

| Component | Eigenvalue | Difference | Proportion | Cumulative |
|---|---|---|---|---|
| 1 | 3.32 | 2.07 | 0.47 | 0.47 |
| 2 | 1.25 | 0.37 | 0.18 | 0.65 |
| 3 | 0.88 | 0.21 | 0.13 | 0.78 |
| 4 | 0.66 | 0.19 | 0.10 | 0.87 |
| 5 | 0.48 | 0.22 | 0.07 | 0.94 |
| 6 | 0.25 | 0.09 | 0.04 | 0.98 |
| 7 | 0.16 | | 0.02 | 1.00 |

Table 6 shows the attributes loading for each PC on the day after cook. PC1 on the day after cook is driven by firmness, shininess, press elasticity, jiggle elasticity, and opacity. PC2 is driven by syneresis.

**Table 6. Eigenvectors of starches on the day after cook**

| | Factor1 | Factor2 | Factor3 | Factor4 | Factor5 |
|---|---|---|---|---|---|
| opacity | 0.82 | 0.09 | -0.38 | 0.03 | -0.27 |
| shininess | -0.61 | 0.40 | 0.26 | 0.61 | -0.02 |
| firmness | 0.92 | 0.14 | -0.04 | 0.05 | 0.12 |
| Press elasticity | -0.75 | -0.38 | -0.24 | -0.15 | 0.36 |
| syneresis | 0.04 | 0.91 | -0.06 | -0.27 | 0.29 |
| graininess | 0.56 | -0.16 | 0.77 | -0.19 | 0.08 |
| Jiggle elasticity | 0.75 | -0.24 | -0.13 | 0.40 | 0.41 |

A series of experimental food products were made using various starches, including the Comparative A and C starches above and four starches of the disclosure (8, 9, 10 and 11, having sedimentation volumes of 20, 25, 30 and 35 mL/g, respectively.

### Application screening in yogurt:

Samples 8 and 9 (sedimentation volumes 20 and 25 mL/g, respectively) were tested in a yogurt model system along with Comparative A. Yogurt compositional formula and batch formula are given in Tables 7 and 8, respectively.

**Table 7. Compositional formula for yogurt white mass**

| | % |
|---|---|
| Butterfat | 1.50 |
| Milk solids non fat | 11.50 |
| Sucrose | 2.80 |
| Starch | 3.00 |

**Table 8. Batch formula for yogurt white mass**

| | % | **Grams** |
|---|---|---|
| Skim milk | 86.09 | 5165.40 |
| Cream | 4.09 | 245.40 |
| Nonfat dry milk - low heat | 3.69 | 221.40 |
| Starch | 3.33 | 199.80 |
| Sucrose | 2.80 | 168.00 |

### Preparation:

1. Weigh fluid dairy and dry ingredients separately.
2. Add dry ingredients to the fluid dairy under agitation to ensure proper hydration.
3. Process through Microthermics EHVH indirect tubular heat exchanger system
   a. Preheat to 65.6 °C (150 °F) max.
   b. Homogenize (upstream) at 6.9 MPa (1000 psi) (single stage).
   c. Final heat to 90.6 °C (195 °F) with a 30 second hold time.
   d. Cool pasteurized product close to the inoculation temperature of 43 °C.
4. Inoculate with Chr Hansen YoFlex LF706 cultures at 0.015% by weight (1 vial per 6000g batch).
5. Incubate at 43°C (109.4°F) until pH 4.6 (approximately 3-4 hours).
6. Break curd and cool product to <30°C (<85°F) or below.
7. Pump through a smoothing valve or screen.
8. Package into 8 oz. containers.
9. Refrigerate.

Starch integrity in the yogurts was qualitatively evaluated by microscopy after staining with iodine and tipping with soap to help dissipate protein from the field of view.

Brookfield viscosity with a Helipath attachment and appropriate T-bar spindle was measured 24 hours after production. Data was collected in triplicate.

Firmness/gel strength was measured immediately after removing from the refrigerator using a TAXT.*Plus* texture analyzer with the TA-55 5-mm puncture probe. The test was conducted in compression using a pre-test speed of 1.0 mm/sec, test speed of 1.0 mm/sec and post-test speed of 10.0 mm/s after a trigger force of 5gf. Analysis was conducted 3 times per sample over 3 samples (total of 9 measurement points).

The viscosity of all yogurts made was similar and within normal batch to batch variation, though the yogurt was made with Sample 8 was the highest, as shown in Table 9, below. Instrumental texture analysis of the yogurt samples was also similar. The closeness of the viscosity and texture values suggests that the casein network formation is the primary contributor to viscosity in this application.

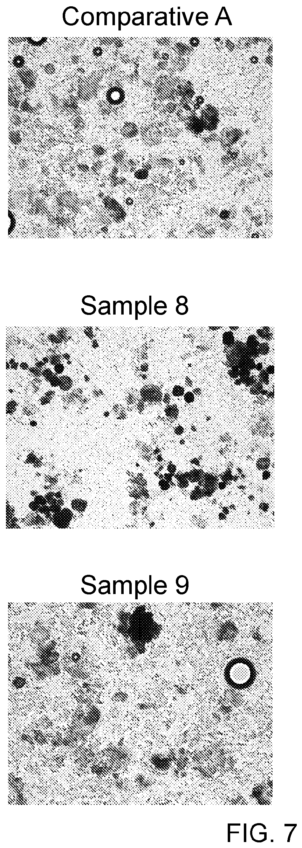

FIG. 7 is a set of microscope images of the test yogurts obtained at 200x magnification. Microscopically, the Sample 8 and Comparative A yogurts contained intact starch granules after processing, although the Sample 8 yogurt was still slight underswollen. Sample 9 yogurt was partially fragmented.

**Table 9. Analytical characterization of test yogurts**

| **Starch** | **Average Yogurt Brookfield Viscosity, (cP)** | **Starch Microscopy Evaluation Score*** | **Instrumental Firmness, (g_{f})** | **Instrumental Stickiness, (g_{f})** |
|---|---|---|---|---|
| Comparative A | 26100 | 3 | 8.97 | -7.17 |
| Sample 8 | 27400 | 2 | 5.46 | -5.82 |
| Sample 9 | 24200 | 4 | 5.88 | -5.74 |

| | | | | |
|---|---|---|---|---|
| *1 = under-swollen; 2 = partially swollen; 3 = optimally swollen; 4 = partially fragmented; 5 = fully fragmented | | | | |

### Application Screening in RTE Kettle Cook Pudding (refrigerated):

Starches 10 and 11 (sedimentation volumes 30 and 35 mL/g, respectively) were tested in the pudding model system along with Comparative C. The test formulation is provided in Table 10.

**Table 10. Vanilla Pudding (Refrigerated) Formula**

| | **%** | **Grams** |
|---|---|---|
| Skim milk | 48.500 | 485.00 |
| Water | 31.198 | 311.98 |
| Sucrose | 14.000 | 140.00 |
| Starch | 4.650 | 46.50 |
| Soybean oil | 1.000 | 10.00 |
| Vanilla flavor/extract | 0.300 | 3.00 |
| Salt | 0.200 | 2.00 |
| Sodium stearoyl lactylate | 0.150 | 1.50 |
| Color, baker's egg shade | 0.002 | 0.02 |

### Preparation:

1. Weigh sucrose into Hobart bowl.
2. Weigh the oil onto the sucrose and/or fructose and mix for 5 minutes on speed 1.
3. Add starch, flavor, salt, SSL and color to sugar/oil mixture and mix an additional 5 minutes on speed 1 or until thoroughly blended.
4. Add dry blend to the water and stir until mixed.
5. Add slurry to milk in Hotmix (with side swept agitator) and mix until dispersed.
6. Cook, with good agitation (using side swept agitator), until the mixture thickens (about 195°F [90°C]) and hold for 5 minutes.
7. Fill hot into containers.
8. Refrigerate.

Starch integrity in the puddings was qualitatively evaluated by microscopy after staining with iodine and tipping with soap to help dissipate protein from the field of view.

Brookfield viscosity with Helipath attachment and appropriate T-bar spindle was measured 24 hours after production. Samples were tested immediately after removing from the refrigerator. Since the samples had settled within those 24 hours, the samples were stirred prior to viscosity and rheology measurements. Analysis was conducted on triplicate samples. Viscoelastic properties of the puddings were measured using a DH-3 advanced rheometer with a 40 mm cross-hatched parallel plate and Peltier bottom plate over a strain sweep from 0.1 to 1000% at a frequency of 1Hz and temperature of 25 C. Analysis was conducted in duplicate.

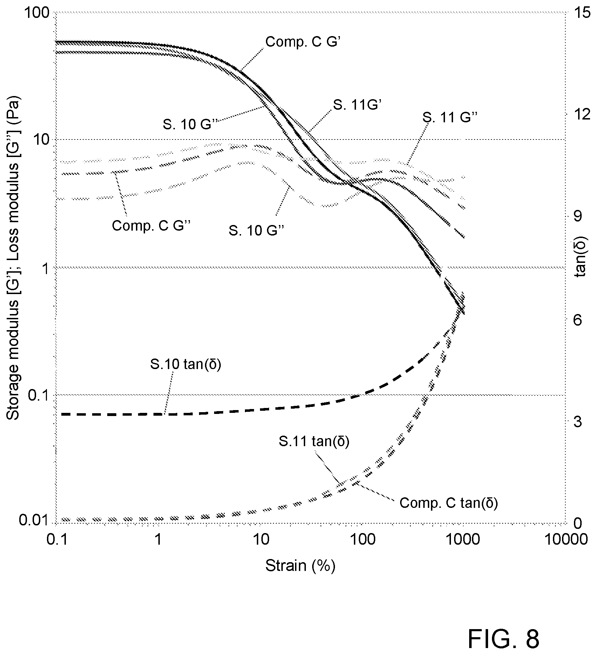

FIG. 8 is a set of viscoelasticity measurements of the puddings. In the kettle-cooked pudding, Sample 11 (sedimentation volume 35 mL/g) provided similar viscosity as Comparative C, while Sample 10 (sedimentation volume 30 mL/g) (Table 11). The viscoelastic properties of the Sample 11 and Comparative C puddings were also quite similar in terms of the storage modulus G' and tan δ, whereas the Sample 10 pudding had much higher loss modulus G" due to its more liquid like nature and low viscosities.

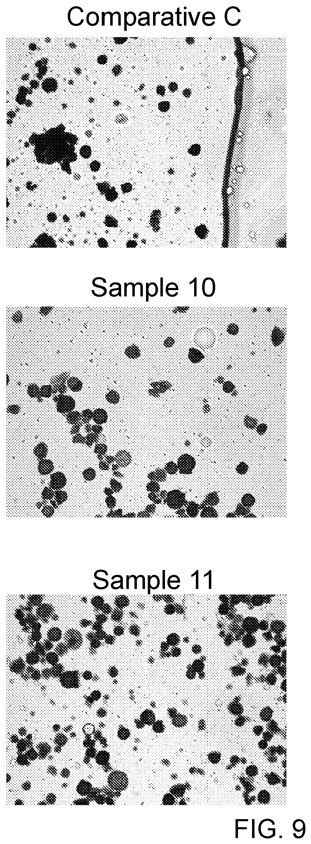

FIG. 9 is a set of microscope images of the test puddings obtained at 200x magnification. All of the starches appeared under-swollen when viewed under the microscope. In particular, Comparative C appeared the most under-swollen, though also provided high viscosity. The starch in all puddings settled or precipitated within 24 hours of production.

In general, Sample 11 (sedimentation volume 35 mL/g) performed similarly to the Comparative C reference.

**Table 11. Kettle-cooked pudding viscosities**

| **Starch** | **Average Pudding Brookfield Viscosity, (cP)** | **Starch Microscopy Evaluation Score** |
|---|---|---|
| Comparative C | 2797 | 1 |
| Sample 10 | 551 | 2 |
| Sample 11 | 3010 | 2 |

### Application Screening in UHT Dairy Dessert:

Samples 8 and 9 (sedimentation volumes 20 and 25 mL/g, respectively) were tested in the ultra-high temperature (UHT) vanilla pudding model system along with Comparative A. The test formulation is given in Table 12.

**Table 12. UHT Vanilla Dairy Dessert Formula**

| | % | Grams |
|---|---|---|
| Whole milk | 86.76 | 5205.60 |
| Sugar | 9.00 | 540.00 |
| Starch | 3.10 | 186.00 |
| Skimmed milk powder | 1.00 | 60.00 |
| Carrageenan (CCCS #3) | 0.06 | 3.60 |
| Vanilla Extract | 0.06 | 3.60 |
| Beta Carotene | 0.02 | 1.20 |
| TOTAL | 100.00 | 6000.00 |

### Preparation:

1. Weigh fluid dairy and dry ingredients separately.
2. Add dry ingredients to the fluid dairy under agitation to ensure proper hydration.
3. Process through Microthermics EHVH indirect tubular heat exchanger system
   a. Preheat to 65.6 °C (150 °F) max.
   b. Homogenize (upstream) at 13.8-10.3 MPa (2000-1500 psi) (single stage).
   c. Final heat to 141 °C (285 °F) with a 3 second hold time.
   d. Cool pasteurized product.
   e. Fill into desired packaging and store under refrigerated conditions after testing.

Starch integrity in the desserts was qualitatively evaluated by microscopy after staining with iodine and tipping with soap to help dissipate protein from the field of view.

Brookfield viscosity with Helipath attachment and appropriate T-bar spindle was measured 24 hours after production. Samples were tested immediately after removing from the refrigerator. Analysis was conducted on triplicate samples.

Firmness was measured immediately after removing from the refrigerator using a TAXT.*Plus* texture analyzer with the TA-55 5-mm puncture probe. The test was conducted in compression using a pre-test speed of 1.0 mm/sec, test speed of 1.0 mm/sec and post-test speed of 10.0 mm/s after a trigger force of 5gf. Analysis was conducted 3 times per sample over 3 samples (total of 9 measurement points).

Table 13 provides analytical characterization of the test desserts. In the UHT dairy dessert, Comparative A provided the highest viscosity. Sample 8 (sedimentation volume 20 mL/g) and Sample 9 (sedimentation volume 25 mL/g) provided very similar viscosities lower than Comparative A.

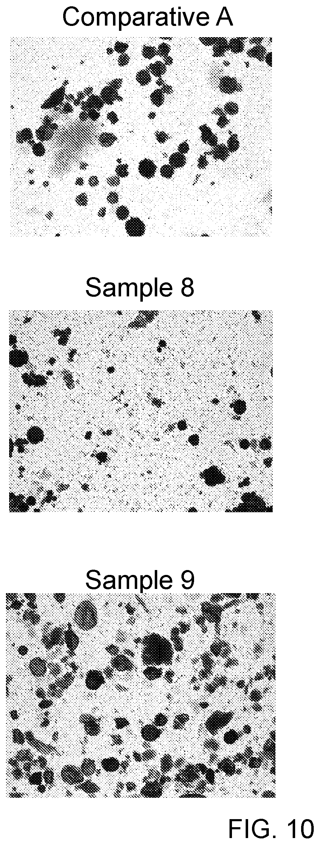

FIG. 10 is a set of microscope images of the test desserts obtained at 200x magnification. Starch granules were underswollen for Comparative A and Sample 8, while the granules were optimally swollen for Sample 9. Sample 8, while underswollen, provides the most similar performance to Comparative A.

**Table 13. Analytical characterization of test dairy desserts**

| **Starch** | **Average Dairy Dessert Brookfield Viscosity, (cPs)** | **Starch Microscopy Evaluation Score*** | **Instrumental firmness, (gf)** | **Stickiness, (gf)** |
|---|---|---|---|---|
| Comparative A | 11400 | 2 | 7.08 | -4.72 |
| Sample 8 | 7800 | 1-2 | 6.97 | -4.49 |
| Sample 9 | 7130 | 3 | 6.97 | -4.45 |

### Application Screening in Bakery Fruit Filling:

Starches 9 and 10 (sedimentation volumes 25 and 30 mL/g, respectively) were tested in the bakery fruit filling model system along with Comparative A and Comparative C. The test formulation is given in Table 14.

**Table 14. Raspberry Bakery Filling Formula**

| | **%** | **Grams** |
|---|---|---|
| Water | 47.04 | 470.40 |
| KRYSTAR crystalline fructose | 40.00 | 400.00 |
| Raspberry juice, 65 brix | 8.00 | 80.00 |
| Starch | 4.50 | 45.00 |
| Raspberry flavor giv xz 441-947-4 | 0.45 | 4.50 |
| Natural color GNT bordeux (2 drops) | 0.01 | 0.1 |

### Preparation:

1. Using Brabender, mix all ingredients.
2. Heat to 85C and hold for 10 min. Cool to 60C.
3. Package and refrigerate.
4. Verify brix (~50) and pH (~3.4).

Starch integrity in the fillings was qualitatively evaluated by microscopy after staining with iodine.

Brookfield viscosity with Helipath attachment and appropriate T-bar spindle was measured 24 hours after production. Samples were tested immediately after removing from the refrigerator. Analysis was conducted on triplicate samples.

Color and translucency was measured using a Hunter ColorFlex colorimeter. A 10mm black ring is inserted into the sample cup and the cup is then filled with sample. A white ceramic disk is then pushed down through the sample until it rests on top of the black disk. This will give a constant light path and white background. The cup with sample is then placed on the instrument port for measurement of L*, a*, b* attributes (after standardization with the white and black tiles). Samples were tested in triplicate.

Table 15 provides analytical characterization of the test fillings. In the fruit filling, both Comparative A and Comparative C provided high viscosity even though these starches have vastly different sedimentation volumes. Sample 10 provided similar high viscosity while Sample 9 was somewhat lower.

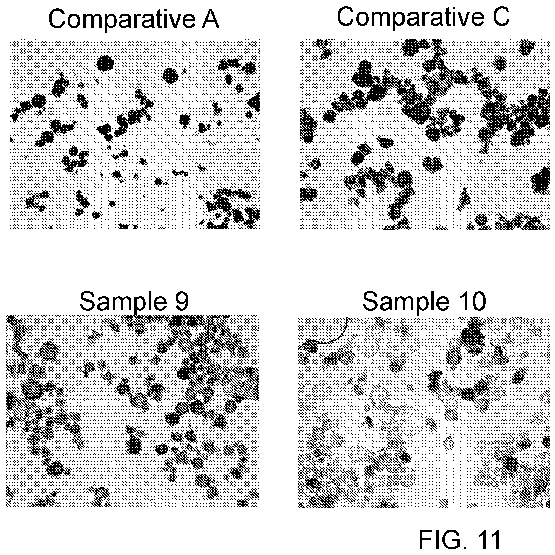

FIG. 11 is a set of microscope images of the test fillings obtained at 200x magnification. Sample 10 provided the optimal swelling when viewed microscopically while all other starches were underswollen. All test fillings were stored in the refrigerator and subsequently gelled and syneresed within 24 hours of refrigerated storage.

The color of the fruit fillings was also assessed as translucency and lack of color contribution is often an advantage of tapioca starches, particularly for this type of application. ΔE₉₄ is an instrumental measure of the relative degree of color difference from a chosen standard, and when the Comparative C fruit filling is chosen as that standard all of the test fruit fillings provide similar color, as shown in Table 16. As a rule of thumb, ΔE₉₄ <1 is not considered different in color visually.

**Table 15. Fruit filling viscosities**

| | **Average Brookfield Viscosity (cPs)** | **Starch Microscopy Evaluation Score** |
|---|---|---|
| **Comparative A** | 110000 | 1 |
| **Comparative C** | 104000 | 2 |
| **Sample 9** | 97700 | 2 |
| **Sample 10** | 112000 | 3 |

**Table 16. Hunter color values of test fruit fillings**

| | **L*** | **a*** | **b*** | **Hue Angle** | **Chroma** | **ΔE₉₄ vs. Comp. A** | **ΔE₉₄ vs. Comp. C** |
|---|---|---|---|---|---|---|---|
| **Comparative A** | 4.08 | 8.52 | 1.14 | 1.02 | 8.59 | | |
| **Comparative C** | 3.91 | 8.32 | 0.56 | 0.28 | 8.34 | | |
| **Sample 9** | 3.36 | 8.64 | 0.62 | 0.33 | 8.66 | 1.17 | 0.66 |
| **Sample 10** | 3.39 | 8.28 | 1.01 | 0.85 | 8.34 | 1.10 | 0.57 |

The particulars shown herein are by way of example and for purposes of illustrative discussion of various aspects and embodiments of the materials and methods of the present disclosure, and are presented in the cause of providing what is believed to be the most useful and readily understood description of the principles and conceptual aspects thereof. In this regard, no attempt is made to show details of the starches and methods described herein in more detail than is necessary for the fundamental understanding thereof, the description taken with the drawings and/or examples making apparent to those skilled in the art how various forms thereof may be embodied in practice. Thus, before the disclosed materials and methods are described, it is to be understood that the aspects described herein are not limited to specific embodiments, apparati, or configurations, and as such can, of course, vary. It is also to be understood that the terminology used herein is for the purpose of describing particular aspects only and, unless specifically defined herein, is not intended to be limiting.

The terms "a," "an," "the" and similar referents used in the context of describing the materials and methods disclosed herein (especially in the context of the following claims) are to be construed to cover both the singular and the plural, unless otherwise indicated herein or clearly contradicted by context. Recitation of ranges of values herein is merely intended to serve as a shorthand method of referring individually to each separate value falling within the range. Unless otherwise indicated herein, each individual value is incorporated into the specification as if it were individually recited herein. Ranges can be expressed herein as from one particular value, and/or to another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

All methods described herein can be performed in any suitable order of steps unless otherwise indicated herein or otherwise clearly contradicted by context. The use of any and all examples, or exemplary language (e.g., "such as") provided herein is intended merely to better illuminate the materials and methods of the disclosure and does not pose a limitation on the scope of the materials and methods otherwise disclosed. No language in the specification should be construed as indicating any non-claimed element as being essential to the practice of the invention.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

As will be understood by one of ordinary skill in the art, each embodiment disclosed herein can comprise, consist essentially of or consist of its particular stated element, step, ingredient or component. As used herein, the transition term "comprise" or "comprises" means includes, but is not limited to, and allows for the inclusion of unspecified elements, steps, ingredients, or components, even in major amounts. The transitional phrase "consisting of" excludes any element, step, ingredient or component not specified. The transition phrase "consisting essentially of" limits the scope of the embodiment to the specified elements, steps, ingredients or components and to those that do not materially affect the embodiment.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained in the materials and methods of the disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements.

Groupings of alternative elements or embodiments of the materials and methods disclosed herein are not to be construed as limitations. Each group member may be referred to and claimed individually or in any combination with other members of the group or other elements found herein. It is anticipated that one or more members of a group may be included in, or deleted from, a group for reasons of convenience and/or patentability. When any such inclusion or deletion occurs, the specification is deemed to contain the group as modified.

Some embodiments of the methods and materials are described herein. Of course, variations on these described embodiments will become apparent to those of ordinary skill in the art upon reading the foregoing description. The present inventors expect skilled artisans to employ such variations as appropriate, and the intend for the materials and methods of the disclosure to be practiced otherwise than specifically described herein. Accordingly, this disclosure contemplates all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

Furthermore, numerous references have been made to patents and printed publications throughout this specification.

In closing, it is to be understood that the embodiments of the methods and materials disclosed herein are illustrative of the principles of the present disclosure. Other modifications that may be employed are within the scope of the disclosure. Thus, by way of example, but not of limitation, alternative configurations of the materials and methods of the present disclosure may be utilized in accordance with the teachings herein. Accordingly, the present disclosure is not limited to that precisely as shown and described in the specification.

## Claims

1. A delayed-gelling, inhibited tapioca starch having
an amylose content in the range of 15-25%;
a sedimentation volume; and
a % solubles value;
wherein a point corresponding to (sedimentation volume, % solubles value) in a plot of % solubles value vs. sedimentation volume falls within the polygon defined by the set of points (19.1 mL/g, 14.1%), (18.1 mL/g, 17.3%), (33.2 mL/g, 26.9%) and (35.7 mL/g, 21.1%), when the sedimentation volume is measured as disclosed in the description and the % solubles value is measured as disclosed in the description;
wherein the starch is not pregelatinized, is not hydroxypropylated, is not acetylated, is not carboxymethylated, is not hydroxyethylated, is not phosphated, is not succinated, is not cationic or zwitterionic, is not crosslinked with phosphate, is not crosslinked with adipate, is not crosslinked with epichlorohydrin, is not crosslinked with acrolein, is not bleached or oxidized with peroxide or hypochlorite, is not dextrinized, does not contain substantial amounts of the repolymerized branched chains typical of dextrins, and substantially lacks 1,2- and 1,3- branching; and
wherein the starch has a gel time of at least 4 hours and no more than 24 hours after being cooked in pH 6.5 phosphate buffer containing 1% NaCl at 5% starch solids for 20 minutes at 95 °C, then being allowed to sit undisturbed at 25 °C.

2. The delayed-gelling, inhibited starch according to claim 1, having an amylose content in the range of 17-25%.

3. The delayed-gelling, inhibited starch according to claim 1 or claim 2, having a sedimentation volume of no more than 22 mL/g.

4. The delayed-gelling, inhibited starch according to claim 1 or claim 2, having a sedimentation volume in the range of 22-27 mL/g.

5. The delayed-gelling, inhibited starch according to claim 1 or claim 2, having a sedimentation volume in the range of 27-32 mL/g.

6. The delayed-gelling, inhibited starch according to claim 1 or claim 2, wherein the point corresponding to (sedimentation volume, % solubles value) in a plot of % solubles value vs. sedimentation volume falls within the polygon defined by the set of points: (20 mL/g, 14.5%), (20 mL/g, 20.0%), (30 mL/g, 25.5%) and (30 mL/g, 17.4%).

7. The delayed-gelling, inhibited starch according to claim 1 or claim 2, wherein the point corresponding to (sedimentation volume, % solubles value) in a plot of % solubles value vs. sedimentation volume falls within the polygon defined by the set of points: (25 mL/g, 16.1%), (25 mL/g, 22.8%), (35 mL/g, 28.2%) and (35 mL/g, 19.1%).

8. The delayed-gelling, inhibited starch according to any of claims 1-7, having a Yellowness Index of 3-10 determined by ASTM E313.

9. The delayed-gelling, inhibited starch according to any of claims 1-8 wherein the delayed-gelling, inhibited starch has a viscosity in the range of 50-1500 mPa.s (50-1500 cP) in a rapid visco analyzer (RVA) test measured as disclosed in the description.

10. A process comprising
providing a delayed-gelling, inhibited starch according to any of claims 1-9,
slurrying the delayed-gelling, inhibited starch in aqueous C2-C3 alkanol to form a slurry, and
subjecting the slurry to conditions of a temperature in the range of 149-182 °C (300-360 °F) and a pressure in the range of 2.76-5.14 mPa (400-600 psig),
to provide a cold water swelling, delayed-gelling starch.

11. The process of claim 10, further comprising cooking the cold water swelling, delayed-gelling starch in the presence of water, providing the cooked starch in combination with one or more other food ingredients, and allowing the starch to form a gel.

12. A method for making a food product, comprising cooking a starch according to any of claims 1-9 in the presence of water, providing the cooked starch in combination with one or more other food ingredients, and allowing the starch to form a gel.

13. A dry mix comprising a starch according to any of claims 1-9, in admixture with one or more additional dry food ingredients.

## Patentansprüche

1. Verzögert gellierende, inhibierte Tapiokastärke, die Folgendes aufweist
einen Amylosegehalt im Bereich von 15-25 %;
ein Absetzvolumen; und
einen %-Wert löslicher Substanzen;
wobei ein Punkt, der dem (Absetzvolumen, %-Wert löslicher Substanzen) in einem Schaubild des %-Werts löslicher Substanzen gegen das Absetzvolumen entspricht, innerhalb des Polygons fällt, das durch den Satz von Punkten (19,1 ml/g, 14,1 %), (18,1 ml/g, 17,3 %), (33,2 ml/g, 26,9 %) und (35,7 ml/g, 21,1 %) definiert ist, wenn das Absetzvolumen wie in der Beschreibung offenbart gemessen wird und der %-Wert löslicher Substanzen wie in der Beschreibung offenbart gemessen wird,
wobei die Stärke nicht vorgelatiniert ist, nicht hydroxypropyliert ist, nicht acetyliert ist, nicht carboxymethyliert ist, nicht hydroyethyliert ist, nicht phosphatiert ist, nicht succiniert ist, nicht kationisch oder zwitterionisch ist, nicht mit Phosphat vernetzt ist, nicht mit Adipat vernetzt ist, nicht mit Epichlorhydrin vernetzt ist, nicht mit Acrolein vernetzt ist, nicht mit Peroxid oder Hypochlorit gebleicht oder oxidiert ist, nicht dextriniert ist, keine wesentlichen Mengen der repolymerisierten verzweigten Ketten enthält, die für Dextrin typisch sind, und der im Wesentlichen 1,2- und 1,3-Verzweigung fehlt; und
wobei die Stärke eine Gelzeit von mindestens 4 Stunden und nicht mehr als 24 Stunden aufweist, nachdem sie in Phosphatpuffer eines pH-Werts von 6,5, der 1 % NaCl bei 5 % Stärkefeststoffen enthält, 20 Minuten lang bei 95 °C gekocht worden ist, ihr dann gestattet wird, sich bei 25 °C ungestört aufzuhalten.

2. Verzögert gellierende, inhibierte Stärke nach Anspruch 1, die einen Amylosegehalt im Bereich von 17-25 % aufweist.

3. Verzögert gellierende, inhibierte Stärke nach Anspruch 1 oder Anspruch 2, die ein Absetzvolumen von nicht mehr als 22 ml/g aufweist.

4. Verzögert gellierende, inhibierte Stärke nach Anspruch 1 oder Anspruch 2, die ein Absetzvolumen im Bereich von 22-27 ml/g aufweist.

5. Verzögert gellierende, inhibierte Stärke nach Anspruch 1 oder Anspruch 2, die ein Absetzvolumen im Bereich von 27-32 ml/g aufweist.

6. Verzögert gellierende, inhibierte Stärke nach Anspruch 1 oder Anspruch 2, wobei der Punkt, der dem (Absetzvolumen, %-Wert löslicher Substanzen) in einem Schaubild des %-Werts löslicher Substanzen gegen das Absetzvolumen entspricht, innerhalb des Polygons fällt, das durch den Satz von Punkten (20 ml/g, 14,5 %), (20 ml/g, 20,0 %), (30 ml/g, 25,5 %) und (30 ml/g, 17,4) definiert ist.

7. Verzögert gellierende, inhibierte Stärke nach Anspruch 1 oder Anspruch 2, wobei der Punkt, der dem (Absetzvolumen, %-Wert löslicher Substanzen) in einem Schaubild des %-Werts löslicher Substanzen gegen das Absetzvolumen entspricht, innerhalb des Polygons fällt, das durch den Satz von Punkten (25 ml/g, 16,1 %), (25 ml/g, 22,8 %), (35 ml/g, 28,2 %) und (35 ml/g, 19,1 %) definiert ist.

8. Verzögert gellierende, inhibierte Stärke nach einem der Ansprüche 1-7, die einen Gelbstichindex von 3-10, durch ASTM E313 bestimmt, aufweist.

9. Verzögert gellierende, inhibierte Stärke nach einem der Ansprüche 1-8, wobei die verzögert gellierende, inhibierte Stärke eine Viskosität im Bereich von 50-1500 mPa.s (50-1500 cP) in einem Schnellviskositätsanalyse-(RVA-)Test, wie in der Beschreibung offenbart gemessen, aufweist.

10. Verfahren umfassend
Bereitstellen einer verzögert gellierenden, inhibierten Stärke nach einem der Ansprüche 1-9,
Aufschlämmen der verzögert gellierenden, inhibierten Stärke in wässrigem C2-C3-Alkanol, um eine Aufschlämmung zu bilden und
Unterwerfen der Aufschlämmung Bedingungen einer Temperatur im Bereich von 149-182 °C (300-360 °F) und einem Druck im Bereich von 2,76-5,14 mPa (400-600 psig),
um eine kaltwasserquellende, verzögert gellierende Stärke bereitzustellen.

11. Verfahren nach Anspruch 10, ferner umfassend das Kochen der kaltwasserquellenden, verzögert gellierenden Stärke in Gegenwart von Wasser, das Bereitstellen der gekochten Stärke in Kombination mit einem oder mehreren anderen Nahrungsmittelbestandteilen und das Gestatten der Stärke, ein Gel zu bilden.

12. Verfahren zum Herstellen eines Nahrungsmittelprodukts, umfassend das Kochen einer Stärke nach einem der Ansprüche 1-9 in Gegenwart von Wasser, das Bereitstellen der gekochten Stärke in Kombination mit einem oder mehreren anderen Nahrungsmittelbestandteilen und das Gestatten der Stärke, ein Gel zu bilden.

13. Trockenmischung umfassend eine Stärke nach einem der Ansprüche 1-9 in Mischung mit einem oder mehreren zusätzlichen trockenen Nahrungsmittelbestandteilen.

## Revendications

1. Amidon de tapioca inhibé, à gélification retardée ayant
une teneur en amylose comprise entre 15 et 25 %,
un volume de sédimentation, et
une valeur de % de matières solubles,
dans lequel un point correspondant à (volume de sédimentation, valeur de % de matières solubles) dans un graphique de valeur de % en matières solubles en fonction du volume de sédimentation s'inscrit dans le polygone défini par l'ensemble des points (19,1 ml/g, 14,1 %), (18,1 ml/g, 17,3 %), (33,2 ml/g, 26,9 %) et (35,7 ml/g, 21,1 %), lorsque le volume de sédimentation est mesuré tel qu'il est décrit dans la description et la valeur de % de matières solubles est mesurée tel qu'il est décrit dans la description,
dans lequel l'amidon n'est pas prégélatinisé, n'est pas hydroxypropylé, n'est pas acétylé, n'est pas carboxyméthylé, n'est pas hydroxyéthylé, n'est pas phosphaté, n'est pas succiné, n'est pas cationique ni zwitterionique, n'est pas réticulé avec du phosphate, n'est pas réticulé avec de l'adipate, n'est pas réticulé avec de l'épichlorhydrine, n'est pas réticulé avec de l'acroléine, n'est pas blanchi ni oxydé avec du peroxyde ou de l'hypochlorite, n'est pas dextrinisé, ne contient pas de quantités substantielles de chaînes ramifiées repolymérisées typiques des dextrines, et manque substantiellement de ramification 1,2- et 1,3-, et
dans lequel l'amidon a un temps de gélification d'au moins 4 heures et au maximum de 24 heures après avoir été cuit dans un tampon phosphate à pH 6,5 contenant 1 % de NaCl à 5 % de matières solides d'amidon pendant 20 minutes à 95°C, puis en le laissant reposer sans y toucher à 25 °C.

2. Amidon inhibé à gélification retardée selon la revendication 1, ayant une teneur en amylose comprise entre 17 et 25 %.

3. Amidon inhibé à gélification retardée selon la revendication 1 ou 2, ayant un volume de sédimentation ne dépassant pas 22 ml/g.

4. Amidon inhibé à gélification retardée selon la revendication 1 ou 2, ayant un volume de sédimentation dans la plage de 22 à 27 ml/g.

5. Amidon inhibé à gélification retardée selon la revendication 1 ou 2, ayant un volume de sédimentation dans la plage de 27 à 32 ml/g.

6. Amidon inhibé à gélification retardée selon la revendication 1 ou 2, dans lequel le point correspondant à (volume de sédimentation, valeur de % de matières solubles) dans un graphique de valeur de % en matières solubles en fonction du volume de sédimentation s'inscrit dans le polygone défini par l'ensemble des points suivants : (20 ml/g, 14,5 %), (20 ml/g, 20,0 %), (30 ml/g, 25,5 %) et (30 ml/g, 17,4 %),

7. Amidon inhibé à gélification retardée selon la revendication 1 ou 2, dans lequel le point correspondant à (volume de sédimentation, valeur de % de matières solubles) dans un graphique de valeur de % de matières solubles en fonction du volume de sédimentation s'inscrit à l'intérieur du polygone défini par l'ensemble des points suivants : (25 ml/g, 16,1 %), (25 ml/g, 22,8 %), (35 ml/g, 28,2 %) et (35 ml/g, 19,1 %).

8. Amidon inhibé à gélification retardée selon l'une quelconque des revendications 1 à 7, ayant un indice de jaunissement de 3 à 10 déterminé selon ASTM E313.

9. Amidon inhibé à gélification retardée selon l'une quelconque des revendications 1 à 8, dans lequel l'amidon inhibé à gélification retardée a une viscosité comprise entre 50 et 1500 mPa.s (50 à 1500 cP), dans un essai d'analyseur rapide de viscosité (RVA) mesuré tel qu'il est décrit selon la description.

10. Procédé comprenant :
la fourniture d'un amidon inhibé à gélification retardée selon l'une quelconque des revendications 1 à 9,
la mise en bouillie de l'amidon inhibé à gélification retardée dans de l'alcanol aqueux en C2-C3 pour former une bouillie, et
la soumission de la bouillie à des conditions de température dans une plage de 149 à 182 °C (300 à 360 °F) et de pression dans une plage de 2,76 à 5,14 mPa (400 à 600 psig),
pour produire un amidon à gélification retardée, gonflant dans l'eau froide.

11. Procédé selon la revendication 10, comprenant en outre la cuisson de l'amidon à gélification retardée, gonflant à l'eau froide, en présence d'eau, la fourniture de l'amidon cuit en association avec un ou plusieurs ingrédients alimentaires, et le fait de laisser l'amidon former un gel.

12. Procédé de fabrication d'un produit alimentaire, comprenant la cuisson d'un amidon selon l'une quelconque des revendications 1 à 9 en présence d'eau, la fourniture de l'amidon cuit combiné avec un ou plusieurs autres ingrédients alimentaires, et le fait de laisser l'amidon former un gel.

13. Mélange sec comprenant un amidon selon l'une quelconque des revendications 1 à 9, en mélange avec un ou plusieurs ingrédients alimentaires secs additionnels.
